# EUROPÄISCHE PATENTANMELDUNG

(11) **EP 1 013 512 A2**
(43) Veröffentlichungstag der Anmeldung: **28.06.2000**
(21) Anmeldenummer: 99124978.0
(22) Anmeldetag: 15.12.1999
(51) Int. Cl.: B60R 16/04

(54) **Abdeckung für eine Batterie**

(30) Priorität: 23.12.1998 DE 29822878 U
(71) Anmelder: Illbruck GmbH, D-51381 Leverkusen (DE)
(72) Erfinder: Cucchiara, Salvatore, 51399 Burscheid (DE)
(74) Vertreter: Müller, Enno, Dipl.-Ing.

(57) **Zusammenfassung**

Die Erfindung betrifft eine Abdeckung (A) für eine Batterie (1) in einem Kraftfahrzeug, mit Wandbereichen, die in Form von Seitenwänden (14) bis (17) ausgebildet sind. Um neben einer der Abdeckung innewohnenden Abschirmwirkung auch eine temperatur-erniedrigende Komponente erzielen zu können, schlägt die Erfindung vor, daß die Seitenwände (14,15) einen Luftkanal (K) begrenzen und hierzu eine Einströmöffnung (9) und eine Ausströmöffnung (10) aufweisen.

## Beschreibung

Die Erfindung bezieht sich auf eine Abdeckung für eine Batterie in einem Kraftfahrzeug, mit Wandbereichen, die in Form von Seitenwänden ausgebildet sind.

Eine Abdeckung dieser Art ist durch das DE-GM 93 01 725 bekannt und dient dazu, die Batterie in einen Kraftfahrzeug vor zu großer (Strahlungs) -Wärme des Motors zu schützen.

Aufgabe der Erfindung ist es, eine gattungsgemäße Abdeckung so weiterzubilden, daß über die der Abdeckung innewohnende abschirmende Wirkung eine zusätzliche Komponente der Temperatur-Erniedrigung hinzukommt.

Diese Aufgabe ist zunächst und im wesentlichen bei einer Abdeckung für eine Batterie mit den Merkmalen des Anspruchs 1 gelöst, wobei darauf abgestellt ist, daß die Seitenwände einen Luftkanal begrenzen und hierzu eine Einströmöffnung und eine Ausströmöffnung aufweisen. So wird über die Abschirmung hinaus die Batterie einer permanenten, praktisch gezielten Luftdusche ausgesetzt. Hierzu können bordeigene Mittel herangezogen werden, beispielsweise durch Anschluß an den Ansaugkanal des Kraftfahrzeuges. Besonders wirkungsvoll fällt eine solche Lösung aus, wenn, wie weiter vorgeschlagen, der Luftkanal teilweise durch eine Außenfläche der Batterie begrenzt ist. Der wärmeabtragende Luftstrom wirkt so noch inniger. Andererseits kann auch eine Lösung von Vorteil sein, gemäß der der Luftkanal vollständig gesondert von der Batterie ausgebildet ist. Hierbei braucht nicht auf die Grundmaße einer Batterie abgestellt zu werden. Um mit Sicherheit zu vermeiden, daß etwa von der Batterie ausgehende Dämpfe in den Brennraum des Motors getragen werden, empfiehlt sich eine Lösung dergestalt, daß der Luftkanal nur über einen Teil der Höhe der Batterie ausgebildet ist. Optimiert ist die entsprechende Maßnahme dabei dadurch, daß an einer Seitenwand des Luftkanals ein Dichtungselement befestigt ist zur abdichtenden Zusammenwirkung mit der Außenfläche der Batterie. Das Dichtungselement fungiert dabei zugleich als elastischer Abstandshalter mit guter Abstützung der Batterie. Zweckmäßig ist das Dichtungselement wulstartig ausgebildet. Hier kann durchaus geschlossenporiges Schaumstoffmaterial Anwendung finden. Eine günstige Variante besteht darin, daß das Dichtungselement aus einem Schlauch gebildet ist. Was weiter die gesonderte Ausbildung der Abdeckung betrifft, so liegt eine baulich besonders vorteilhafte Lösung dadurch vor, daß der Luftkanal durch jeweils teilweise eine Seitenwand und eine Deckenwand ausbildende Einzelteile zusammengefügt ist. Selbstredend bildet das eine Einzelteil mit seinem Boden dann die Decke der Abdeckung. Weiter wird noch vorgeschlagen, daß eine Seitenwand luftkanalinnenseitig mit einem Absorber belegt ist. Der kann zugleich schall- und wärmeabsorbierend ausgelegt sein. Baulich vorteilhaft wird die gesonderte Ausbildung der Abdeckung konkret dadurch erreicht, daß ein erstes Einzelteil die Außenwand des Luftkanals und einen Aufnahmeboden für die Batterie sowie einen Boden des Luftkanals ausbildet und ein zweites Einzelteil eine Luftkanal-Decke sowie gegebenenfalls eine Luftkanal-Innenwand und vorzugsweise einen Batterie-Deckel aufweist. Ein solcher Deckel erbringt eine Vollabdeckung zugleich mit dem Vorteil der Vermeidung der Gefahr von Kurzschlüssen bspw. durch polberührendes Ablegen von Werkzeugen bei etwaigen Reparaturen.

Weiter ist der Gegenstand der Erfindung gekennzeichnet durch eine über Eck gehende Beabstandung von Einström-Öffnung und Ausströmöffnung. Die über Eck gehende Kanalführung ist der Wärmequelle sprich Motor zugewandt. Zudem besteht noch ein vorteilhafter Lösungsvorschlag von sogar eigenständiger Bedeutung durch eine Liefereinheit für/mit Batterie mit Luftansaugstutzen und damit leitungsverbundenem Luftfilterkasten, in welchem Zwischenbereich der Luftkanal bypaßartig strömungsverbunden die Batterie umgibt. Eine solche Einheit kann weitestgehend bzw. sogar vollständig vormontiert sein. Gegenstand der Erfindung ist darüber hinaus auch eine Abdeckung für eine Batterie, bei welcher der Luftfilter und die Batterie in einen gemeinsamen, luftströmungsverbundenen Gehäuse angeordnet sind und wobei die den Luftfilter durchsetzende Ansaugluft vollständig unter Umströmung der Batterie angesaugt wird. Auch hierdurch ist eine Baueinheit gegeben, welche bspw. vollständig vormontiert in den Motorraum eingesetzt werden kann. Die Abdeckung bildet hierbei einen Teilbereich des Luftkanals, bevorzugt einen Anfangsteilbereich. Demzufolge weist die Abdeckung die Ansaugöffnung des Luftkanals auf. Die Auslaßöffnung der Abdeckung ist gemäß den zuvor beschriebenen Ausführungen über einen üblichen Luftkanal mit dem Motor verbunden. Die über die Einlaßöffnung angesaugte Luft umströmt auch hierbei die bezüglich der Temperatur einzuregelnde Batterie und verläßt die Abdeckung nach Durchsetzen eines integrierten Luftfilters. Dieser Luftfilter ersetzt den üblichen, im Ansaugbereich angeordneten Filter, wobei weiter die Abmaße des in der Abdeckung integrierten Luftfilters denen eines handelsüblichen Ansaug-Luftfilters entsprechen. Bevorzugt wird hierbei eine Ausgestaltung, bei welcher Luftfilter und Batterie in Nebeneinanderanordnung vorgesehen sind. Es sind darüber hinaus auch andere Anordnungen denkbar, so bspw. eine etagenweise Anordnung. Zudem wird vorgeschlagen, daß das Gehäuse in einem Querschnitt stufenartig ausgebildet ist, wobei die Batterie auf dem Boden einer unteren Stufenkammer steht und der Luftfilter beabstandet zu dem Boden der oberen Stufenkammer angeordnet ist. Zufolge dieser Ausgestaltung kann die Abdeckung hinsichtlich der Strömungswiderstände optimiert werden. Darüber hinaus ist durch die stufenartige Ausbildung eine Anpassung an die motorraumseitigen Montagemöglichkeiten gegeben. So kann bspw. die untere, die Batterie aufnehmende Stufenkammer auf einer entsprechend ausgebildeten Stellfläche im Motorraum positioniert sein, wobei hingegen die stufenartig hierzu versetzt angeordnete obere Stufenkammer sich bspw. über einen erhöhten Bereich im Motorraum, bspw. über einen Radkasten erstreckt. Um darüber hinaus Batteriedämpfe nicht über den gebildeten Luftkanal zum Motorbrennraum weiterzuleiten, wird zunächst vorgeschlagen, daß der Luftkanal im Bereich der Batterie oberseitig von einer Schaumstofflage begrenzt ist. Bevorzugt kommt hier ein geschlossenporiger Schaumstoff zum Einsatz, welcher dichtend eine Luftkanaldecke ausbildet. Darüber hinaus kann auch eine gehäuseseitige Decke vorgesehen sein. Als besonders vorteilhaft erweist sich, daß ein den Batterieteil und den Luftfilterteil gemeinsam überfangender Deckel vorgesehen ist. Hierbei ist weiter bevorzugt eine horizontale Trennebene der Abdeckung etwa in Höhe der Pole der einzusetzenden Batterie vorgesehen. Weiter bevorzugt verläuft diese Trennebene auch in Höhe der Luftfilteraustrittsebene. Der beide Teile bzw. beide Kammern überfangende Deckel kann am Unterteil, welches bevorzugt einstückig ausgebildet ist, bspw. angeklipst sein. Es sind jedoch auch andere Befestigungsmöglichkeiten denkbar, so bspw. über Spannbänder.

Weiter kann der Deckel vollständig oder auch partiell aus einem transparenten Kunststoff gefertigt sein. Bspw. kann ein Sichtfenster im Bereich des zu überdeckenden Luftfilters im Deckel ausgebildet sein, zur visuellen Kontrolle des Luftfilter-Verschutzungsgrades. Durch Abnahme des beide Kammern überfangenden Deckels sind sowohl die Batterie als auch der Luftfilter zur Wartung freigelegt. Es ist darüber hinaus auch eine zweiteilige Ausführung des Deckels denkbar. Schließlich ist vorgesehen, daß der zum Motor führende Luftauslaß in dem Deckel angeordnet ist. Demzufolge ist der Deckel austrittseitig des Luftfilters angeordnet. Einlaßöffnung und Auslaßöffnung der gesamten Abdeckung sind auch hierbei bevorzugt in einer Diagonalanordnung zueinander positioniert.

Der Gegenstand der Erfindung ist nachstehend anhand dreier zeichnerisch veranschaulichter Ausführungsbeispiele näher erläutert. Es zeigt:
- Fig. 1: die Abdeckung gemäß erstem Ausführungsbeispiel in Vorderansicht;
- Fig. 2: die Draufsicht hierzu;
- Fig. 3: die Draufsicht auf ein erstes Einzelteil der Abdeckung;
- Fig. 4: den Schnitt gemäß Linie IV-IV in Figur 1, und zwar in etwa natürlicher Größe;
- Fig. 5: eine der Figur 4 entsprechende Darstellung unter Luftkanal-Mitbildung durch einen Abschnitt der Außenfläche der Batterie;
- Fig. 6: eine Draufsicht auf die die Abdeckung einbeziehende Liefereinheit der erfindungsgemäßen Lösung;
- Fig. 7: einen Längsschnitt durch eine Abdeckung gemäß zweitem Ausführungebeispiel;
- Fig. 8: die Stirnansicht auf die Abdeckung einer dritten Ausführungsform;
- Fig. 9: eine Seitenansicht der Abdeckung gemäß Fig. 8;
- Fig. 10: die Rückansicht der Abdeckung;
- Fig. 11: eine weitere Seitenansicht der Abdeckung;
- Fig. 12: den Schnitt gemäß der Linie XII-XII in Fig. 11;
- Fig. 13: den Schnitt gemäß der Linie XIII-XIII in Fig. 12, unter Fortlassung der einzusetzenden Batterie und eines mitaufnehmbaren Luftfilters;
- Fig. 14: eine der Fig. 13 entsprechende Schnittdarstellung, jedoch bei Einsatz der Batterie und des Luftfilters;
- Fig. 15: den Schnitt gemäß der Linie XV-XV in Fig. 14;
- Fig. 16: eine schematische Draufsichtsdarstellung auf einen Kraftfahrzeug-Motorraum, bei partiell geschnittener Motorhaube, zur Darstellung der Anordnung der Abdeckung gemäß der dritten Ausführungsform.

Die Abdeckung aller Ausführungsbeispiele ist in ihrer Gesamtheit mit A bezeichnet. Deren Inneres nimmt eine Batterie 1 auf, die im Motorraum eines Kraftfahrzeuges angeordnet ist. Die entsprechende bordseitige Stellfläche ist mit 2 bezeichnet.

Die Batterie 1 ist von üblicher Bauart, geht also im oberen Bereich in die üblichen Pole 3 mit Anschlußklemmen über.

Die Abdeckung A aller Ausführungsbeispiele besteht aus einem ersten Einzelteil 4 und einem zweiten Einzelteil 5. Das erste Einzelteil 4 ist, bezogen auf die horizontale Stellfläche 2, als Unterteil realisiert und das andere als Oberteil. Die Teilungs- oder besser gesagt Schließfuge erstreckt sich unterschiedlich. Beim ersten Ausführungsbeispiel verläuft sie etwa auf halber Höhe der als Vollabdeckung realisierten Abdeckung A und beim zweiten und dritten Ausführungsbeispiel im oberen Bereich.

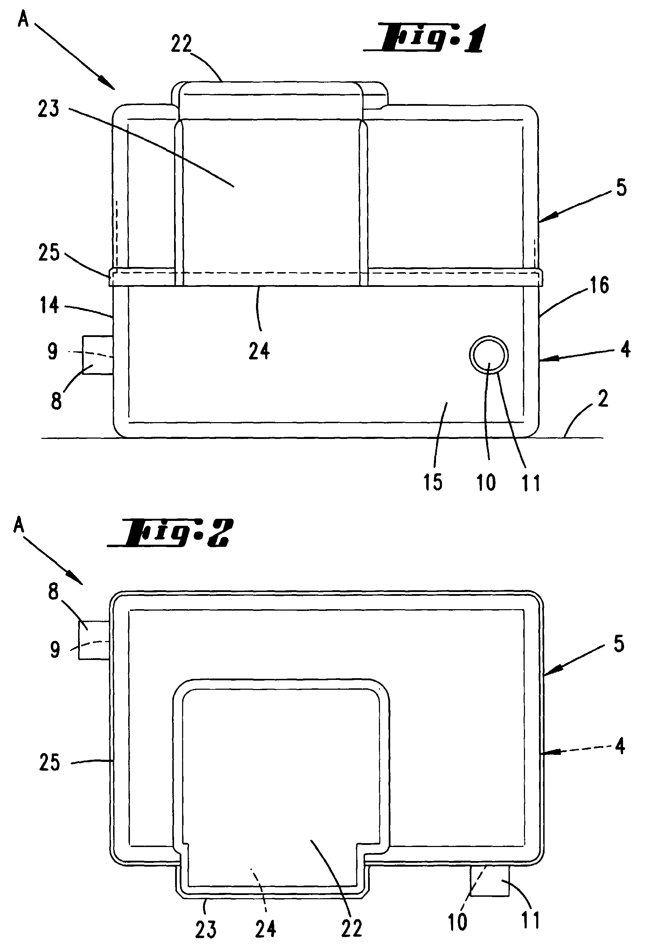

Mittel- oder unmittelbar zur eingestellten Batterie 1 wirkend ist im Inneren der Abdeckung A in den beiden ersten Ausführungsbeispielen gemäß den Fig. 1 bis 7 ein Luftkanal K realisiert. Außer der abschirmenden Funktion der Abdeckung A gegenüber auf die Batterie 1 gehender Wärme, beispielsweise der des Kraftfahrzeugmotors, wird über besagten Luftkanal K durch Strömung die Luft im Umfeld der Batterie 1 ausgetauscht. Mit anderen Worten: Die Batterie 1 wird einer permanenten Luftdusche ausgesetzt.

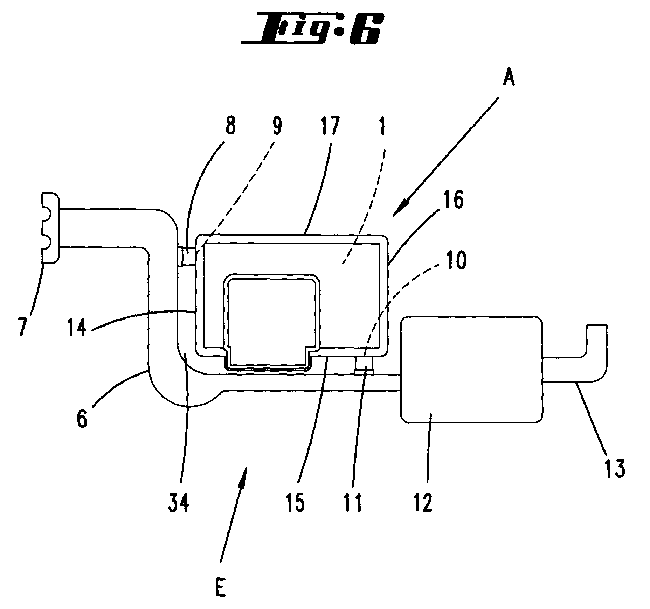

Hierzu ist das Innere der Abdeckung A im ersten und zweiten Ausführungsbeispiel gemäß den Fig. 1 bis 7 mit dem bordeigenen Ansaugkanal 6 des Kraftfahrzeuges verbunden. Es handelt sich um eine bypaßartige Strömungsverbindung. Gleich hinter dem Kanalabschnitt eines Ansaugstutzens 7 (vergleiche Figur 6) befindet sich ein Querkanal 8. Der führt zu einer Luft-Einströmöffnung 9 der Abdeckung A. Diese (9) kommuniziert mit dem Luftkanal K. Am anderen Ende der Abdeckung A befindet sich eine Luft-Auslaßöffnung 10. Auch hier besteht eine Strömungsbrücke über einen Querkanal 11 zum dort vorbeiführenden, weitergehenden Abschnitt des Ansaugkanals 6.

Gleich hinter dieser Stelle befindet sich ein Luftfilterkasten 12 mit Anschlußkanal 13 zum nicht dargestellten Motor hin.

Extern kanalbildend bezüglich 6 und 13 sind hierbei strömungsoptimierte Rohrabschnitte der mit E bezeichneten Liefereinheit.

Wie weiter Figur 6 entnehmbar, verläuft der Kanal 6 im Bereich der Batterie 1 unter über Eck gehender, seitlicher Beabstandung zur Abdeckung A, und zwar entlang zweier aneinander anschließender Seitenwände 14 und 15 der einen rechteckigen Grundriß aufweisenden, kastenförmigen Abdeckung A. Die daran anschließenden, entgegen Uhrzeigersinn folgenden Seitenwände heißen 16 und 17. 14 und 16 sind Schmalwände.

Die Einströmöffnung 9 und die Auslaßöffnung 10 erstrecken sich im Bereich diagonal liegender Ecken der Abdeckung A, so daß sich der Luftkanal K zumindest gut über die gesamte Länge der einen kürzeren Seitenwand 14 und der daran anschließenden längeren Seitenwand 15 erstreckt.

Beim Ausführungsbeispiel ist aber eine vollständige Herumführung des Luftkanals K um das zu kühlende Objekt bevorzugt.

Die Abdeckung A gemäß erstem Ausführungebeispiel sieht vor, daß der dortige Luftkanal K teilweise durch eine Außenfläche 18 der Batterie 1 begrenzt ist. Die so eine Kanalwand werdende Außenfläche 18 verläuft im wesentlichen vertikal und praktisch parallel zur den Luftkanal K mitbildenden Innenfläche 19 des ersten Einzelteils 4.

Den inneren und oberen, begrenzenden Abschluß des im wesentlichen horizontal verlaufenden Luftkanals K bilden Dichtungselemente 20 und 21. Das mit 20 bezeichnete liegt der Stellfläche 2 näher. Da beide Dichtungselemente 20,21 im unteren, ersten Einzelteil 4 untergebracht sind, ist der Luftkanal K nur über einen Teilabschnitt der Höhe der Batterie 1 gehend. Erfaßt ist demgemäß der untere Bereich der Batterie 1 respektive des Batteriegehäuses. Insoweit steht der geschaffene Luftkanal K höhenmäßig so tief, daß im Kopfbereich der Batterie 1 etwa austretende Dämpfe nicht mit der Wärmeabtragsstromung in den Brennraum des Motors getragen werden. Die zirkulierende Luft strömt vielmehr nur im Mittelbereich ein und aus.

Die an der Innenfläche 19 einer oder mehrerer Seitenwände 14 bzw. 15 bzw. 16 bzw. 17 angebrachten Dichtungselemente 20,21 sind zur abdichtenden und auch abstandshaltenden Zusammenwirkung mit der Außenfläche 18 der Batterie 1 entsprechend nachgiebig und doch auch fest genug gestaltet.

Die Dichtungselemente 20,21 sind an der Innenfläche 19, beispielsweise durch Kleben, gehaltert. Auch eine thermische Fixierung ist denkbar unter Verwendung entsprechenden Materiales. Es handelt sich um wulstartig ausgebildete Körper. Dargestellt und bevorzugt sind Schläuche aus Gummi oder gummiähnlichem Kunststoff. Letztere weisen in Grundstellung etwa kreisrunden Wandungsquerschnitt auf. Durch endseitiges Schließen der Schläuche, indem diese beispielsweise stumpf und abgedichtet gegen die korrespondierende Wandungsfläche der Abdichtung A treten, läßt sich über die ihnen innenwohnende Rückstellkraft hinaus auch noch die Polsterwirkung der eingeschlossenen Luft nutzen.

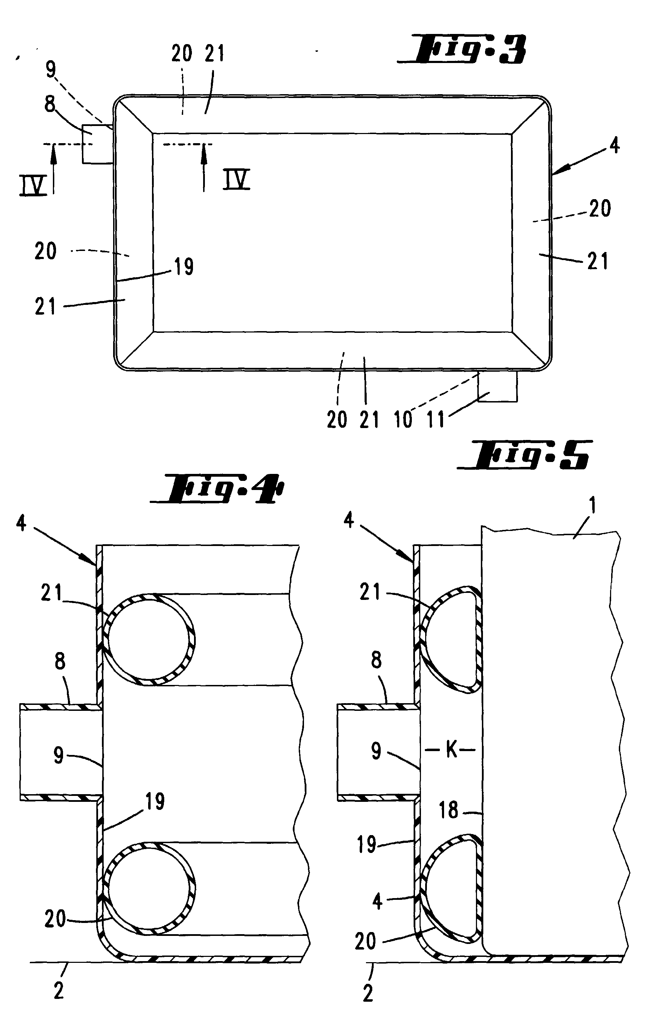

Figur 4 zeigt die unbestückte Situation und Fig. 5 die, in der die Batterie 1 in das Inere des ersten Einzelteils 4 eingestellt ist. Unter Umständen kann das untere Dichtungselement 20 entfallen. Dann würde der Unterflurbereich der Batterie 1 in die Strömung mit einbezogen sein.

Auch porengeschlossene Schaumstoffwülste lassen sich in der entsprechenden Weise nutzen.

Welcher Lösung auch immer der Vorrang eingeräumt wird, bei durchgehend umlaufendem Luftkanal K werden die einzelnen Schläuche oder Schaumstoffwülste zu einem Rahmen zusammengesetzt, wobei in den Ecken gehrungsartige Übergänge angewandt sind (wie bei aus Leisten hergestellten Bilderrahmen). Die konkave Krümmung der Ecken der Abdeckung A kann durch entsprechende Winkeländerung der Gehrungsschnitte kompensiert werden.

Die beiden die Abdeckung A schaffenden Einzelteile 4,5 gemäß dem ersten Ausführungsbeispiel sind als Tiefziehteile realisiert. An obenliegenden zweiten Einzelteil 5, welches als Haubenteil fungiert, sind aus den Figuren 1 und 2 besonders deutlich hervorgehende weitere Vorkehrungen getroffen. Die bestehen zum einen in der Schaffung eines domartigen Überbaues 22. Der schafft einen größeren Freistand im Bereich der Pole 3 und der ihnen zugeordneten Anschlußklemmen.

Besagter Überbau 22 geht zum anderen gemäß Figur 1 frontseitig in einen Erker 23 über. Der ist an seiner Unterseite bei 24 offen. Hierüber kann das Anschlußkabel in das Innere der Abdeckung A eingeführt werden. Der Erker 23 steht nicht weiter frontal vor, als der der Luft-Auslaßöffnung 10 außenseitig vorgeschaltete Querkanal 11.

Weiter ist beim Tiefziehen des zweiten Einzelteils 5 noch ein unterer, nach auswärts abgesetzter Stülprand 25 berücksichtigt, der ein abgestütztes Aufsetzen auf den korrespondierenden Stirnrand des wannenförmigen, ersten Einzelteile 4 erlaubt.

Die Abdeckung A gemäß zweitem Ausführungsbeispiel unterscheidet sich in weiterbildenden Details, wobei jedoch das Grundprinzip der sogenannten Luftdusche voll verwirklicht ist. Soweit bauliche Übereinstimmung vorliegt, sind die Bezugsziffern gemäß erstem Ausführungsbeispiel angewandt, zum Teil ohne textliche Wiederholungen.

So ist hier die Ausgestaltung getroffen, daß der Luftkanal K vollständig gesondert von der Batterie 1 ausgebildet ist. Das sieht im einzelnen so aus, daß der Luftkanal K durch die jeweils teilweise eine Seitenwand und eine Bodenwand ausbildenden Einzelteile 4,5 zusammengesetzt ist. Die Seitenwände tragen auch hier die Bezugsziffern 14 bis 17, wobei lediglich die Seitenwände 14 und 16, also die kürzeren, zu sehen sind.

Das untere, erste Einzelteil 4 erstreckt sich nahezu über die gesamte Höhe der Abdeckung A. Seine vier Seitenwände bilden die umlaufende Außenwand a des Luftkanals K, ferner einen Aufnahmeboden b für die Batterie 1 und peripher einen umlaufenden Boden c als untere Begrenzung des Luftkanals K.

Das zweite, von oben her zugeführte Einzelteil 5 schafft im Gegenzug den oberseitigen Abschluß des umlaufenden Luftkanals K, indem der periphere Abschnitt dieses Einzelteils 5 eine Decke d zum Luftkanal K beisteuert.

Das zweite Einzelteil 5 ist beim dargestellten Ausführungsbeispiel aber auch noch zur Bildung einer Luftkanal-Innenwand e herangezogen, und zwar indem von dem die Decke d bildenden Boden dieses mit seiner Öffnung nach unten gestülpten Einzelteils 5 eine den Umriß der Batterie 1 berücksichtigende Wand W ausgeht, welche mit ihrem unteren Stirnrand 26 auf dem Aufnahmeboden b steht. Außenseitig dieser Wand W umfaßt diese konturentsprechend und eng anliegend eine in Gegenrichtung gehende, d.h. nach oben weisende, im Gesamtboden b-c wurzelnde kurze Wand 27.

Weiter ist in dem die Decke d bildenden Part des Einzelteils 5 ein Batteriedeckel 28 berücksichtigt. Der kann eingeklipst sein oder aber auch klappbar zugeordnet werden. Über den Batteriedeckel 28 besteht Zugang zu den Polen 3 bzw. den hinzugehörenden Klemmen. Nach außen hin offene Fenster erlauben hier den Kabelanschluß. Der geschlossene Batteriedeckel 28 vermeidet so auch hier den Kontakt beispielsweise von Montagewerkzeugen mit den Polen 3.

Das über alles gehende, deckelbildende Einzelteil 5 ist über Klipse 29 am außenseitigen oberen Rand des ersten Einzelteils 4 gehaltert. Besagte Klipse 29 weisen unten einen Betätigungsvorsprung 30 auf und lassen sich über eine Filmscharnierachse 31, letztere in bzw. an der Oberseite der Decke d liegend, in Öffnungsrichtung ausschwenken. In ausgeschwenkter Stellung geht der verhakende Untergriff der klinkenartigen Klipse 29 an einem Gegenhalt 32 des unteren oder ersten Einzelteils 4 verloren. Die Batterie 1 kann nach Entfernen des Teils 5 entnommen werden etc. Dieser Zugang erlaubt überdies die übliche Flüssigkeitskontrolle der Batterie 1.

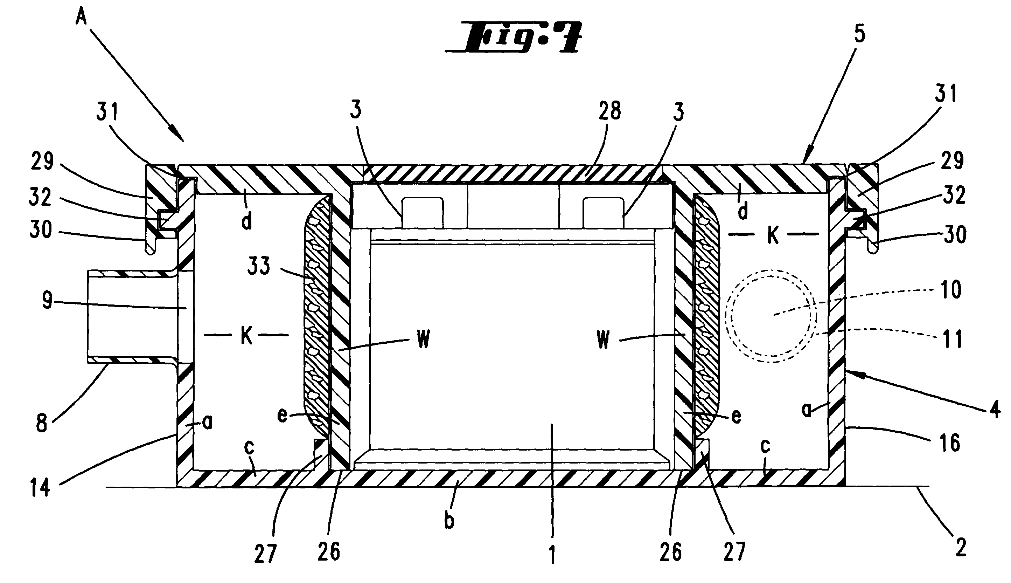

Wie Figur 7 noch entnehmbar, ist die Wand W außenseitig mit einem Absorber 33 belegt. Es kann sich hier um offenzelligen Schaumstoff handeln. Wandseitig gehend sind die oberen und unteren umlaufenden Ränder des Absorber 33 konvex verrundet, also lippenartig ausgespitzt. Die Dämmung kann sowohl im Hinblick auf einen weiteren, jetzt mehrwandigen Wärmeschutzschirm fungieren, andererseits aber auch Strömungsgeräusche im Luftkanal K minimieren.

Die in Figur 6 dargestellte Liefereinheit E umfaßt sowohl die Abdeckung A für die Batterie 1 mit Luftansaugstutzen 7 als auch den damit leitungsverbundenen Luftfilterkasten 12, in welchem Zwischenbereich praktisch in einer Bucht 34 des Leitungssystems liegend der Luftkanal K bypaßartig strömungsverbunden die Batterie 1 umgibt. Bestandteil der Einheit E ist aber auch der Anschlußkanal 13. Die zeichnerische Darstellung erfolgt aus Gründen der Übersichtlichkeit weitestgehend schematisch, Selbstredend weisen die Rohrabschnitte von 6 und 13 die üblichen Flansche und Anschlüsse für die Tragkonstruktion zum Motorträger hin auf.

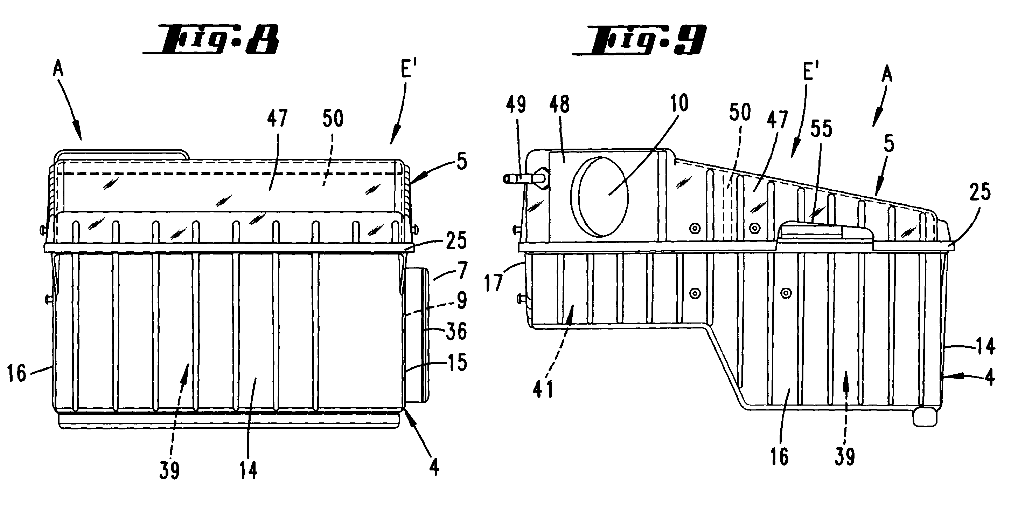

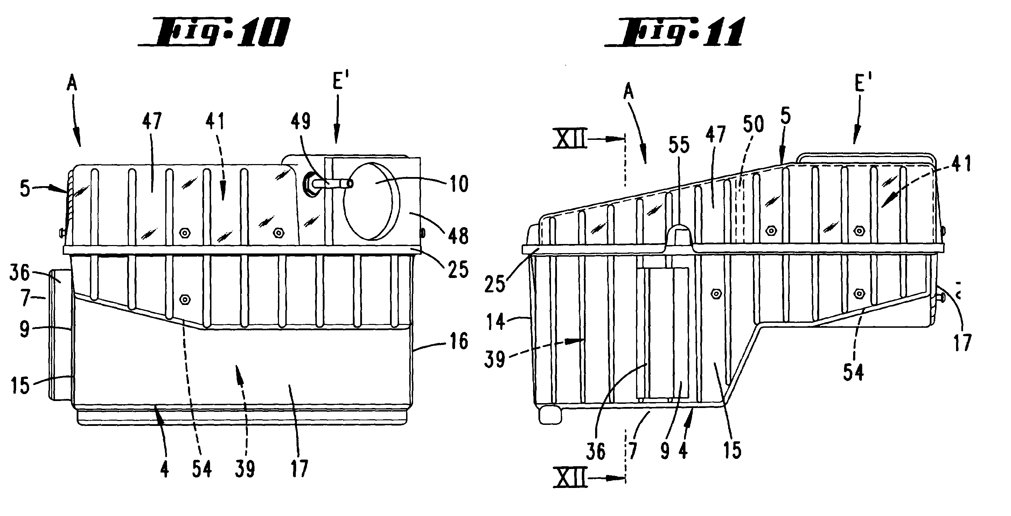

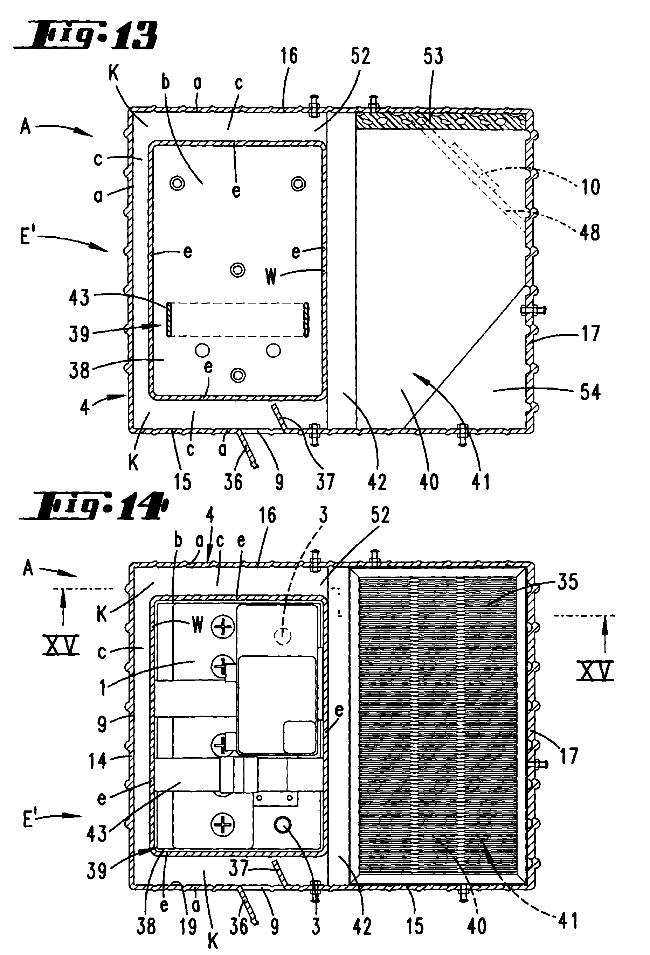

Die Fig. 8 bis 16 zeigen eine Abdeckung A in einer dritten Ausführungsform. Diese Abdeckung A bildet auch hier eine Liefereinheit E', welch letztere die erfindungsgemäße Abdeckung für die Batterie 1 mit einer Luft-Einströmöffnung 9 und einen in der Abdeckung A integrierten Luftfilter 35 mit einer zugeordneten Luft-Auslaßöffnung 10 umfaßt.

Entgegen dem zuvor beschriebenen Ausführungsbeispiel ist die Abdeckung A und somit der in dieser ausgebildete Luftkanal K nicht bypaßartig mit dem Luftansaug-Leitungssystem verbunden, sondern bildet vielmehr einen linearen Teilabschnitt der Ansaugleitung aus. Zufolge dessen durchströmt die gesamte, angesaugte Luft die Abdeckung A.

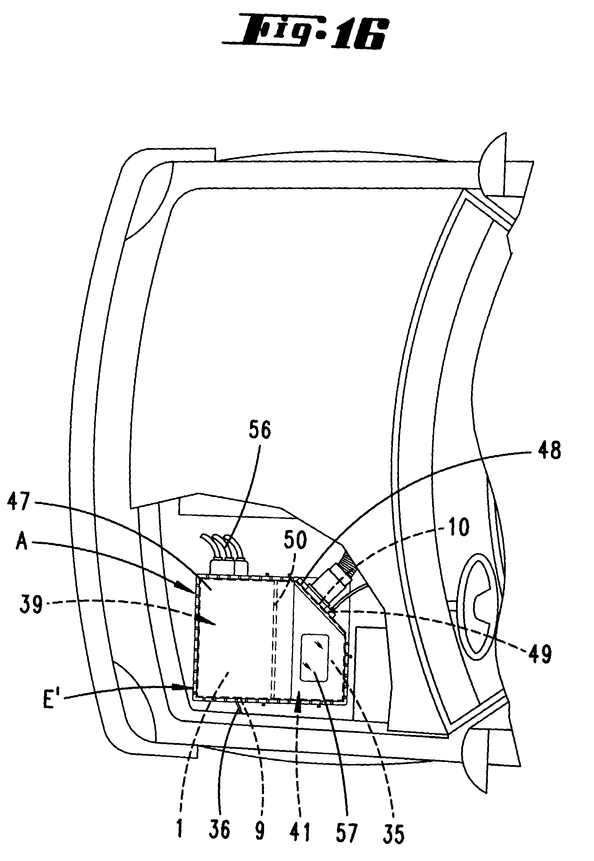

Die Luft-Einströmöffnung 9 ist in diesem Ausführungsbeispiel zugleich der Ansaugstutzen 7, wozu im Bereich der Luft-Einströmöffnung 9 ein nach außen weisendes Luftleitblech 36 ausgeformt ist. Dieses, die Luft-Einströmöffnung 9 an der in Fahrtrichtung vorderen Randkante begrenzende Luftleitblech 36 ist in dem dargestellten Ausführungsbeispiel, bezogen auf einen Grundriß, entgegen der Fahrtrichtung geneigt (vergl. Fig. 16).

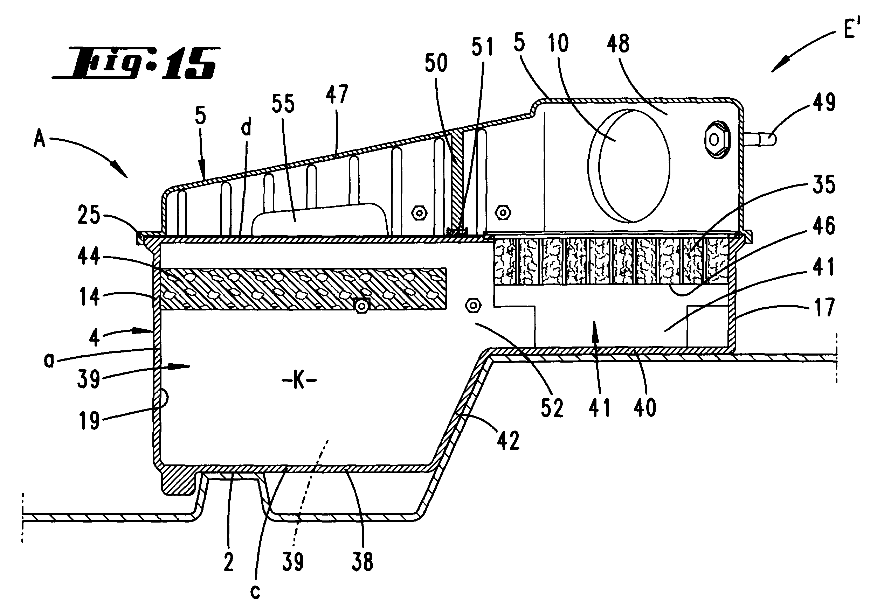

Desweiteren ist die Luft-Einströmöffnung 9 auch innenseitig, d. h. dem Luftkanal K zugeordnet, mit einem, in Fahrtrichtung an der hinteren Randkante angeordneten Leitblech 37 versehen. Letzteres ist -im Grundriß betrachtet- parallel zum außenliegenden Luftleitblech 36 ausgerichtet. Durch die Anordnung der Leitbleche 36 und 37 ist eine gerichtete Luftströmung in dem Luftkanal K vorgegeben -in dem dargestellten Ausführungsbeispiel in einem Grundriß gemäß Fig. 14 im Uhrzeigersinn-.

Das Gehäuse der Abdeckung A verläuft in einem Querschnitt gemäß Fig. 15 stufenartig, wobei die Batterie 1 auf einem Boden 38 einer unteren Stufenkammer 39 positioniert ist und der in der Abdeckung A integriert angeordnete Luftfilter 35 beabstandet zu einem Boden 40 einer oberen Stufenkammer 41 angeordnet ist (vergl. Fig. 15).

Im Übergangsbereich zwischen unterer Stufenkammer 39 und oberer Stufenkammer 41 ist eine -im wesentlichen in Strömungsrichtung- geneigte Leitwand 42 gebildet, durch welche eine strömungsgünstige Umlenkung der durch den Luftkanal K gesaugten Luft in die obere (Luftfilter)-Stufenkammer 41 erzielt ist.

Der Luftkanal K ist im als Unterteil ausgebildeten ersten Einzelteil 4 gebildet, wobei die Seitenwände 14 bis 16 der Abdeckung A zugleich die Außenwände a des Luftkanals K bilden. Ferner ist der Boden 38 der unteren Stufenkammer 39 als Aufnahmeboden b für die Batterie 1 und als peripher umlaufender Boden c zur unteren Begrenzung des Luftkanals K ausgebildet. Die innere Begrenzung des Luftkanals K ist durch eine sich vom Boden 38 über die Höhe der Seitenwände 14 bis 16 erstreckende, umlaufende Wand W gebildet. In dem durch die Wand W abgegrenzten Innenraum ist auf dem Aufnahmeboden b die Batterie 1 abstellbar. Letztere ist über Befestigungsmittel -in dem dargestellten Ausführungsbeispiel über ein Spannband 43, welches durch den Aufnahmeboden b tretend an der Karosserie im Bereich der Stellfläche 2 verankert ist- fixierbar.

Nach oben ist der Luftkanal K zunächst begrenzt durch eine zwischen der Außenwand a und der durch die Wand W gebildeten Kanalinnenwand e gehalterten Schaumstofflage 44. Bevorzugt kommt hier ein geschlossenporiger Schaumstoff zum Einsatz. Darüber hinaus ist oberhalb dieser Schaumstofflage 44 eine umlaufende Decke d vorgesehen, so daß -im Grundriß der Abdeckung A betrachtet- lediglich der Aufnahmeraum für die Batterie 1 und die Aufnahmekammer für den Luftfilter 35 offen ist.

Der Luftkanal K ist in dem dargestellten Ausführungsbeispiel, zumindest im die Batterie 1 umspülenden Bereich, vollständig im Unterteil (Einzelteil 4) gebildet.

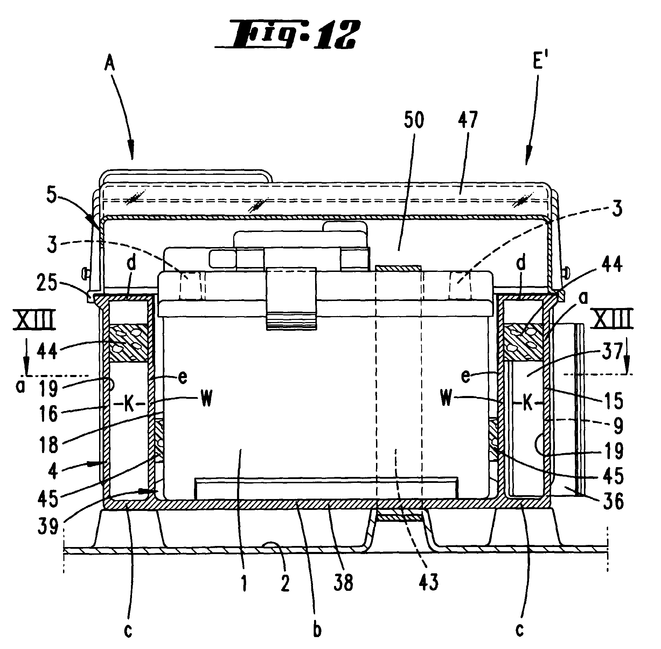

Die in die untere Stufenkammer 39 einzusetzende Batterie 1 wird seitlich an den Wänden W abgestützt durch weitere Schaumstoffeinlagen 45 (vergl. Fig. 12).

Der Boden 40 der oberen Stufenkammer 41 ist etwa auf halber Höhe der unteren, die Batterie 1 aufnehmenden Stufenkammer 39 positioniert. Der in dieser oberen Stufenkammer 41 eingelegte Luftfilter 35 stützt sich randseitig auf einer am oberen Rand ausgeformten Stufenausbildung der die Stufenkammer 41 begrenzenden Seitenwände ab, wobei die nach oben, d. h. der Stufenkammer 41 abgewandte Oberfläche des Luftfilters 35 nahezu mit der nach oben weisenden Oberfläche der Decke d des Luftkanals K im Bereich der unteren Stufenkammer 39 fluchtet.

Es kommt hierbei ein handelsüblicher Luftfilter 35 zum Einsatz, dessen Unterseite 46 beabstandet ist zum Boden 40 der oberen Stufenkammer 41.

Die auch in diesem Ausführungsbeispiel zweigeteilte Abdeckung A weist eine Fügelinie auf, welche bei eingebauter Batterie 1 etwa in Höhe der Pole 3 verläuft. Das zweite Einzelteil 5 ist hier als Deckel 47 ausgebildet, welches gemeinsam den Batterieteil und den Luftfilterteil überdeckt, deren Seitenwände sich auf Randverdickungen der Seitenwände des unteren Einzelteiles 4 abstützen.

Zur Verbindung der beiden Einzelteile 4 und 5 kann eine Klipsverbindung vorgesehen sein. Es kann jedoch auch eine Fixierung des Deckels 47 an dem Unterteil 4 über elastische, bspw. gummiartige Befestigungsringe oder dergleichen erfolgen.

In dem dem Luftfilter 35 zugeordneten Bereich ist der Deckel 47 mit der Luft-Auslaßöffnung 10 versehen. Letztere ist in einem diagonal ausgerichteten Wandabschnitt 48 vorgesehen und ist darüber hinaus im wesentlichen diagonal zur Luft-Einströmöffnung 9 positioniert.

Darüber hinaus kann in diesem Diagonalwandabschnitt 48 ein Anschlußnippel 49 für eine Unterdruckleitung oder dergleichen vorgesehen sein.

Der den Luftfilter 35 überdeckende Bereich des Deckels 47 ist durch eine angeformte Zwischenwand 50 von dem die Batterie 1 überfangenden Bereich getrennt. Diese Zwischenwand 50 stützt sich im zusammengebauten Zustand auf der den Übergangsbereich von unterer Stufenkammer 39 zur oberen Stufenkammer 41 überdeckenden Decke d unter Zwischenlage einer Dichtungseinlage 51 ab.

An der Innenseite der dem Luftkanalausgang 52 zur oberen Stufenkammer 41 zugeordneten Seitenwand der Luftfilteraufnahme ist eine weitere Schaumstofflage 53 befestigt. Letztere dient zur Geräuschreduzierung und bringt darüber hinaus den Vorteil einer Strömungsumlenkung, um die gesamte Fläche des Luftfilters 35 zur Filtrierung der Ansaugluft zu nutzen.

Desweiteren ist zur Optimierung der Filtereigenschaften der Boden 40 der oberen Stufenkammer 41 im diagonal zum Luftkanalaustritt 52 liegenden Eckbereich nach oben in Richtung auf den Luftfilter 35 angewinkelt. Dieser aufgestellte Bodenabschnitt ist mit der Ziffer 54 versehen. Im Grundriß betrachtet ist dieser abgewinkelte Bodenabschnitt 54 etwa klappsymmetrisch zur Ausrichtung der die Luft-Auslaßöffnung 10 aufweisenden Diagonalwand 48 positioniert. Zufolge dieser Ausgestaltung ist eine gezielte Umlenkung der angesaugten Luft in Richtung auf die Unterseite 46 des Luftfilters 35 gegeben.

Das den Deckel 47 bildende zweite Einzelteil 5 besitzt im Bereich der Seitenwände, dem Batterieabschnitt zugeordnet, Durchtrittsöffnungen 55 zum Durchführen von an die Batterie 1 anzuschließenden Kabeln 56.

Der Deckel 47 kann -wie dargestellt- ein vollständig transparentes Kunststoffteil sein. Es besteht jedoch auch die Möglichkeit, diesen lediglich partiell transparent auszugestalten, so bspw. durch Ausbildung eines Sichtfensters 57 in dem den Luftfilter 35 überdeckenden Bereich (vergl. Fig. 16).

Im Winter liegen überdies gute Insolationswerte gegen Kälte vor.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Abdeckung (A) für eine Batterie (1) in einem Kraftfahrzeug, mit Wandbereichen, die in Form von Seitenwänden (14 bis 17) ausgebildet sind, dadurch gekennzeichnet, daß die Seitenwände (14,15) einen Luftkanal (K) begrenzen und hierzu eine Einströmöffnung (9) und eine Ausströmöffnung (10) aufweisen.

2. Abdeckung nach Anspruch 1 oder insbesondere danach, dadurch gekennzeichnet, daß der Luftkanal (K) teilweise durch eine Außenfläche (18) der Batterie (1) begrenzt ist.

3. Abdeckung nach einem oder mehreren der vorhergehenden Ansprüche oder insbesondere danach, dadurch gekennzeichnet, daß der Luftkanal (K) vollständig gesondert von der Batterie (1) ausgebildet ist.

4. Abdeckung nach einem oder mehreren der vorhergehenden Ansprüche oder insbesondere danach, dadurch gekennzeichnet, daß der Luftkanal (K) nur über einen Teil der Höhe der Batterie (1) ausgebildet ist.

5. Abdeckung nach einem oder mehreren der vorhergehenden Ansprüche oder insbesondere danach, dadurch gekennzeichnet, daß an einer Seitenwand (14 bzw. 15 bzw. 16 bzw. 17) des Luftkanals (K) ein Dichtungselement (20,21) befestigt ist zur abdichtenden Zusammenwirkung mit der Außenfläche (18) der Batterie (1).

6. Abdeckung nach einem oder mehreren der vorhergehenden Ansprüche oder insbesondere danach, dadurch gekennzeichnet, daß das Dichtungselement (20,21) wulstartig ausgebildet ist.

7. Abdeckung nach einem oder mehreren der vorhergehenden Ansprüche oder insbesondere danach, dadurch gekennzeichnet, daß das Dichtungselement (20,21) aus einem Schlauch gebildet ist.

8. Abdeckung nach einem oder mehreren der vorhergehenden Ansprüche oder insbesondere danach, dadurch gekennzeichnet, daß der Luftkanal (K) durch jeweils teilweise eine Seitenwand und eine Bodenwand ausbildende Einzelteile (4,5) zusammengefügt ist.

9. Abdeckung nach einem oder mehreren der vorhergehenden Ansprüche oder insbesondere danach, dadurch gekennzeichnet, daß eine Seitenwand (Wand W) luftkanalinnenseitig mit einem Absorber (33) belegt ist.

10. Abdeckung nach einem oder mehreren der vorhergehenden Ansprüche oder insbesondere danach, dadurch gekennzeichnet, daß ein erstes Einzelteil (4) die Außenwand (a) des Luftkanals (K) und einen Aufnabmeboden (b) für die Batterie (1) sowie einen Boden (c) des Luftkanals (K) ausbildet und ein zweites Einzelteil (5) eine Luftkanal-Decke (d) sowie gegebenenfalls eine Luftkanal-Innenwand (e) und vorzugsweise einen Batteriedeckel (28) aufweist.

11. Abdeckung nach einem oder mehreren der vorhergehenden Ansprüche oder insbesondere danach, gekennzeichnet durch eine über Eck gehende Beabstandung von Einströmöffnung (9) und Ausströmöffnung (10).

12. Abdeckung nach einem oder mehreren der vorhergehenden Ansprüche oder insbesondere danach, gekennzeichnet durch eine Liefereinheit (E) bestehend aus Abdeckung (A) für / mit Batterie (1) mit Luftansaugstutzen (7) und damit leitungsverbundenem Luftfilterkasten (13), in welchem Zwischenbereich der Luftkanal (K) bypaßartig strömungsverbunden die Batterie (1) umgibt.

13. Abdeckung nach einen oder mehreren der vorhergehenden Ansprüche oder insbesondere danach, dadurch gekennzeichnet, daß der Luftfilter (35) und die Batterie in einem gemeinsamen, luftströmungsverbundenen Gehäuse angeordnet sind und daß die den Luftfilter (35) durchsetzende Ansaugluft vollständig unter Umströmung der Batterie (1) angesaugt wird.

14. Abdeckung nach einem oder mehreren der vorhergehenden Ansprüche oder insbesondere danach, dadurch gekennzeichnet, daß Luftfilter (35) und Batterie (1) in Nebeneinanderanordnung vorgesehen sind.

15. Abdeckung nach einem oder mehreren der vorhergehenden Ansprüche oder insbesondere danach, dadurch gekennzeichnet, daß das Gehäuse in einem Querschnitt stufenartig ausgebildet ist, wobei die Batterie (1) auf dem Boden (38) einer unteren Stufenkammer (39) und der Luftfilter (35) beabstandet zu dem Boden (40) einer oberen Stufenkammer (41) angeordnet ist.

16. Abdeckung nach einem oder mehreren der vorhergehenden Ansprüche oder insbesondere danach, dadurch gekennzeichnet, daß der Luftkanal (K) im Bereich der Batterie (1) oberseitig von einer Schaumstofflage (44) begrenzt ist.

17. Abdeckung nach einem oder mehreren der vorhergehenden Ansprüche oder insbesondere danach, dadurch gekennzeichnet, daß ein den Batterieteil und den Luftfilterteil gemeinsam überfangender Deckel (47) vorgesehen ist.

18. Abdeckung nach einem oder mehreren der vorhergehenden Ansprüche oder insbesondere danach, dadurch gekennzeichnet, daß der zum Motor führende Luftauslaß in dem Deckel (47) angeordnet ist.
